# EUROPEAN PATENT SPECIFICATION

(11) **EP 0 516 359 B1**
(45) Date of publication and mention of the grant of the patent: **04.09.1996**
(21) Application number: 92304691.6
(22) Date of filing: 22.05.1992
(51) Int. Cl.: H04N 11/00, H04N 7/00, H04N 7/08

(54) **Widescreen television signal processing apparatus**
Vorrichtung zum Verarbeiten eines Grossbildfernsehsignals
Dispositif de traitement d'un signal de télévision à grand écran

(30) Priority: 27.05.1991 JP 120969/91
(43) Date of publication of application: 02.12.1992
(73) Proprietor: MATSUSHITA ELECTRIC INDUSTRIAL CO., LTD., Kadoma-shi, Osaka-fu, 571 (JP)
(72) Inventor: Abe, Yoshio, Kobe-shi (JP); Kageyama, Sadashi, Hirakata-shi (JP); Inoue, Shuji, Moriguchi-shi (JP); Yasumoto, Yoshio, Nara-shi (JP); Uwabata, Hideyo, Osaka-shi (JP)
(74) Representative: Votier, Sidney David

(56) References cited:
- EP-A- 0 253 623
- GB-A- 2 174 266

## Description

### BACKGROUND OF THE INVENTION

### Field of the Invention

This invention relates to a television signal processing apparatus which can realize high definition television broadcasting while maintaining compatibility with respect to the conventional system by the use of the existing spectrum.

### Description of the Prior Art

The television broadcasting in these days is based on the NTSC (National Television System Committee) standards which specify that the number of scanning lines is 525, the scanning is 2 : 1 interlaced scanning, the horizontal bandwidth of the luminance signal is 4.2 MHz, the aspect ratio is 4 : 3, etc. (Refer to, for example, a book entitled "Color Television" in the Broadcasting Technology Series, edited by the Japan Broadcasting Corporation and published by the Japan Broadcasting Publishing Corporation in 1961.) Recently, a television signal processing method has been proposed which is compatible with the existing television broadcasting mode and according to which a picture having an aspect ratio of 16 : 9 can be received and displayed on the receiving side.

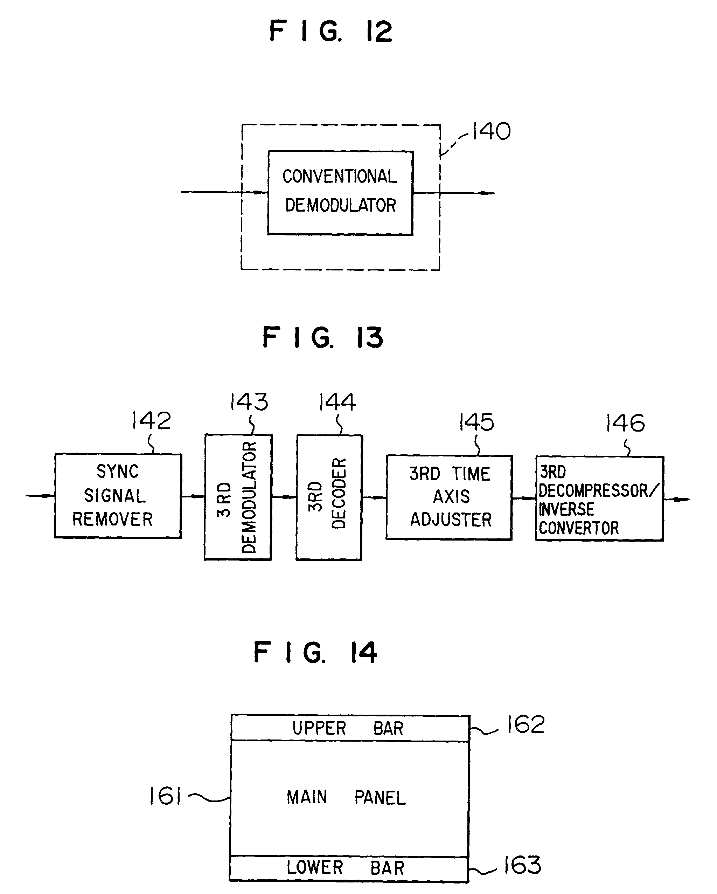

A letter box method which is a prior art method having concern with the present invention will now be described by reference to Fig. 14. Fig. 14 shows a picture displayed by a television signal according to the letter box method. Referring to Fig. 14, a wide aspect picture signal modulated in the same manner as that of the conventional NTSC signal is transmitted to be displayed on a central main panel part 161 of the television screen. Horizontal/vertical high-frequency band components of the picture signal to be added to that of the main panel part 161 are modulated in an analog fashion and transmitted to be displayed on an upper bar part 162 and a lower bar part 163. At the receiving side, the high-frequency band components of the picture signal are added to that of the main panel so as to reproduce the wide aspect picture. Thus, the aspect ratio can be changed while maintaining the compatibility with that of the conventional broadcasting system. (Refer to Urano et al " Report of Experiments Regarding Second Generation EDTV, Part 1", the Journal of Institute of Television Engineers of Japan, BCS 90-22, Vol. 14, No. 20, pp. 19-24, 1990.)

Although an EDTV having a relatively good resolution can be provided according to the letter box method described above, the EDTV based on the letter box method will never be developed to the level capable of broadcasting a high definition picture in future. On the other hand, use of a new broadcast wave for the broadcasting of such a high definition picture has been proposed. However, because the broadcast wave spectrum has already been fully used in this field, the use of such a new broadcast spectrum will inevitably lead to the same channel interference, and the practical use is technically quite difficult. Also, various problems from the aspect of effective utilization of the spectrum will arise.

Reference is made to EP-A-0253623 which describes television multiplex transmitter/receiver processors. During transmission a 5:3 aspect input signal is processed to extract a conventional 4:3 main signal for NTSC encoding. The remaining sub-picture signals are separated into low and high frequency components which are respectively multiplexed in the blanking periods of the main picture signal and in the vestigial sideband through quadrature modulation. During reception, the 5:3 aspect image can be reconstructed by a suitable television processor, or the main NTSC encoded 4:3 aspect image can be displayed with a conventional television.

Reference is also made to GB-A-2174266 which describes a time-division multiplexing circuit for the transmission to two signal sources which can be displayed simultaneously as sub-pictures by a receiver.

### SUMMARY OF THE INVENTION

It is an object of the present invention to provide a television signal processing apparatus which permits broadcasting of a picture signal having a high resolution while maintaining the compatibility with the conventional broadcasting systems and ensuring the capability of future development without wasteful use of the broadcast wave spectrum and according to which a plurality of broadcast programs can be simultaneously broadcast.

The present invention provides a television signal processing apparatus comprising:
a first input signal processor unit for processing a first picture signal;
a second input signal processor unit for processing a second picture signal;
a main panel signal processor unit for processing an input to obtain an output as a main panel signal corresponding to a main panel part which constitutes a picture having a predetermined aspect ratio larger than a conventional aspect ratio of 4:3;
a bar signal processor unit for processing an input to obtain an output as a bar signal which constitutes upper and lower bar parts of a 4:3 aspect ratio picture relative to a picture having said predetermined aspect ratio greater than 4:3;
a main signal processor unit for processing inputs to obtain an output as a main signal corresponding to a picture having the aspect ratio 4:3; and
a modulator unit for modulating an input;
   wherein said first input signal processor unit supplies its output as the input to said bar signal processor unit, said second input signal processor unit supplies its output as the input to said main panel signal processor unit, said bar signal processor unit and said main panel signal processor unit supply their outputs as the inputs to said main signal processor unit, and said main signal processor unit supplies its output as the input to said modulator unit to generate a modulated main output signal;
   wherein the main panel signal corresponding to a main panel part of the second picture signal and the bar parts signal corresponding to the bar parts of the first picture signal are supplied to a conventional modulator in said main signal processing unit.

According to a first stage of the present invention comprising the means described above, the same program is broadcast by being modulated according to a new mode of modulation, such as, digital modulation together with the conventional analog modulation, so that a television receiver can deal also with the new mode of modulation. Further, according to a second stage of the present invention, the conventional analog modulation is replaced by a new mode of modulation, and the high definition component of a picture signal is transmitted according to this new modulation mode, so that a picture having a very high degree of definition can be reproduced on the side of the television receiver. Further, because of the capability of efficient transmission of a picture according to the new modulation mode, a high definition picture can be transmitted in the same frequency range as that of a conventional picture, and the shift between these pictures can be achieved while maintaining the compatibility. Furthermore, in the case of transmission of conventional pictures, a plurality of broadcast programs can be efficiently simultaneously transmitted.

In a related aspect, the invention also provides a television signal processing apparatus comprising:
a demodulator unit for demodulating an input to obtain an output;
a main signal demodulation processor unit for processing an input to obtain first and second outputs as a main signal corresponding to a picture having a conventional aspect ratio 4:3;
a received main panel signal processor unit for processing an input to obtain an output as a received main panel signal corresponding to a main panel part which constitutes a picture having a predetermined aspect ratio within the picture having the aspect ratio 4:3;
a received bar signal processor unit for processing an input to obtain an output as a received bar signal corresponding to upper and lower bar parts which constitute a part of a 4:3 aspect ratio picture relative to a picture having said predetermined aspect ratio;
a multiplex signal demodulator unit; and
a display output unit;
wherein said demodulator unit supplies it main output as the input to said main signal demodulator processor unit, said main signal demodulator processor unit supplies its first output as the input to said received bar signal processor unit and supplies its second output as the input to said received main panel signal processor unit, said received bar signal processor unit supplies its output as the input to said multiplex signal demodulator unit, and said multiplex signal demodulator unit and/or said main panel signal processor unit supplies their outputs as inputs to said display output unit so as to display a picture using said display output unit.

### BRIEF DESCRIPTION OF THE DRAWINGS

Fig. 1 shows a block diagram showing the structure of a transmitter part of an embodiment of the television signal processing apparatus according to the present invention, by way of example.

Fig. 2 shows a block diagram showing the structure of one form of the first input signal processor unit, the quadrature signal processor unit and the bar signal processor unit in the transmitter part of the embodiment of the present invention shown in Fig. 1.

Fig. 3A shows the signal waveform to which a three level synchronizing pulse produced in the transmitter part of the embodiment of the present invention is added.

Fig. 3B shows the signal waveform to which the three level synchronizing pulse produced in the transmitter part of the embodiment of the present invention is added and which includes additional data transmitted in the synchronization and retrace period.

Fig. 3C shows the conventional signal waveform.

Fig. 4 shows a block diagram showing the structure of one form of the second input signal processor unit, the main panel signal processor unit and the main signal processor unit in the transmitter part of the embodiment of the present invention shown in Fig. 1.

Fig. 5 shows a block diagram showing the structure of one form of the quadrature modulator unit in the transmitter part of the embodiment of the present invention.

Fig. 6 shows a block diagram showing the structure of one form of the second input signal processor unit, the main panel signal processor unit and the main signal processor unit in a second aspect of the transmitter part of the embodiment of the present invention shown in Fig. 1.

Fig. 7 shows a block diagram showing the structure of one form of a third input signal processor unit provided in the second aspect of the transmitter part of the embodiment of the present invention.

Fig. 8 shows a block diagram showing the structure of a receiver part of the embodiment of the present invention, by way of example.

Fig. 9 shows a block diagram showing the structure of one form of the quadrature demodulator unit in the receiver part of the embodiment of the present invention shown in Fig. 8.

Fig. 10 shows a block diagram showing the structure of one form of the main signal demodulation processor unit in the receiver part of the embodiment of the present invention.

Fig. 11 shows a block diagram showing the structure of one form of the received quadrature signal processor unit, the received bar signal processor unit and the multiplex signal demodulator unit in the receiver part of the embodiment of the present invention.

Fig. 12 shows a block diagram showing the structure of one form of the received main panel signal processor unit in the receiver part of the embodiment of the present invention.

Fig. 13 shows a block diagram showing the structure of one form of the received main panel signal processor unit in a second aspect of the receiver part of the embodiment of the present invention.

Fig. 14 shows bar parts and a main panel part of a picture displayed on a conventional television screen.

### DESCRIPTION OF THE PREFERRED EMBODIMENTS

A preferred embodiment of the television signal processing apparatus according to the present invention will now be described by reference to the accompanying drawings. First, the structure and operation of its transmitter part will be described.

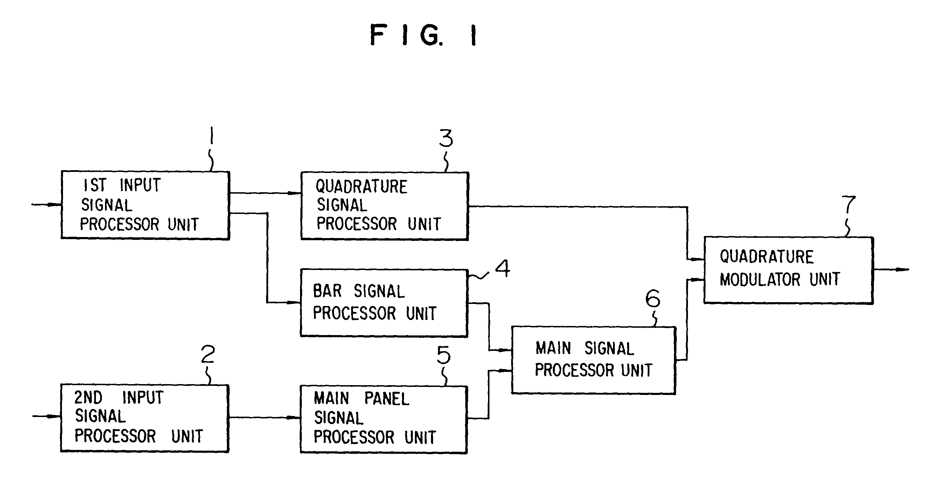

Referring to Fig. 1 showing the structure of the transmitter part of the embodiment of the present invention, the transmitter part includes a first input signal processor unit 1, a second input signal processor unit 2, a quadrature signal processor unit 3, a bar signal processor unit 4, a main panel signal processor unit 5, a main signal processor unit 6, and and a quadrature modulator unit 7. In the first input signal processor unit 1, its picture input signal is subjected to band compression as required and is then divided into two output signals. One of these output signals is supplied to the quadrature signal processor unit 3, and the other is supplied to the bar signal processor unit 4. In the quadrature signal processor unit 3, the input signal is modulated into the frequency band that can be transmitted by quadrature modulation of the video carrier, and the output signal is supplied to the quadrature modulator unit 7.

On the other hand, in the bar signal processor unit 4, its input signal is modulated with the timing conforming to the band that can transmit the bar parts of a picture, and the output signal is supplied to the main signal processor unit 6. In the second input signal processor unit 2, its picture input signal is subjected to processing, such as, a change in the number of scanning lines as required, and the output signal is supplied to the main panel signal processor unit 5. In the main panel signal processor unit 5, its input signal is subjected to processing, such as, timing adjustment so as to transmit the main panel part of the picture, and the output signal is supplied to the main signal processor unit 6.

In the main signal processor unit 6, the output signal of the bar signal processor unit 4 and that of the main panel signal processor unit 5 are modulated in a manner similar to, for example, that of the conventional NTSC system while switching over the inputs according to the timing of the bar parts and main panel part of the picture, and the output signal is supplied to the quadrature modulator unit 7. In the quadrature modulator unit 7, quadrature modulation is carried out using the output signal of the main signal processor unit 6 as a signal modulating the main carrier and using the output signal of the quadrature signal processor unit 3 as a signal modulating the quadrature carrier, and its output signal appears as a video carrier signal having compatibility with a conventional television signal. In the illustrated embodiment of the present invention, both the path for transmitting the output of the quadrature signal processor unit 3 and the path for transmitting the output of the bar signal processor unit 4 are used for transmitting the novel picture signal. However, it is apparent that a higher technique of band compression may be used. Further, only one of the paths described above may be used when the picture quality that may be somewhat lower is allowable.

When the path for transmitting the output of the quadrature signal processor unit 3 only is used, the signal processing in the bar signal processor unit 4 may be conventional. On the other hand, when the path for transmitting the output of the bar signal processor unit 4 only is used, the quadrature modulator unit 7 may be similar to a conventional one.

Further, when the picture input signal of the first input signal processor unit 1 is divided into the two signal components, the bar parts of the picture are considered to be more resistive to propagation distortion. Therefore, when the low frequency component and the high frequency component respectively of the picture signal are supplied to the bar signal processor unit 4 and the quadrature signal processor unit 3, the picture signal can be more reliably transmitted regardless of possible distortion of the paths of transmission, so that the possibility of occurrence of practical problems can be minimized.

Further, in order to efficiently achieve the band compression in the first input signal processor unit 1, it may be sometimes efficient to make digital signal processing for the purpose of, for example, DCT conversion so as to attain efficient digital transmission of picture data. In this case, both the quadrature signal processor unit 3 and the bar signal processor unit 4 modulate such digital data. For example, it is well known in the art that the 16QAM or like modulation method is efficient.

Furthermore, after multiple picture signals are applied as inputs to the second input signal processor unit 2 to be subjected to conversion into digital data and band compression of these digital data, the digital data are transmitted through the picture main panel processor unit 5, so that a plurality of broadcast programs of an ordinary picture quality can be simultaneously transmitted.

One form of the transmitter part of the illustrated embodiment of the present invention will now be described in more detail.

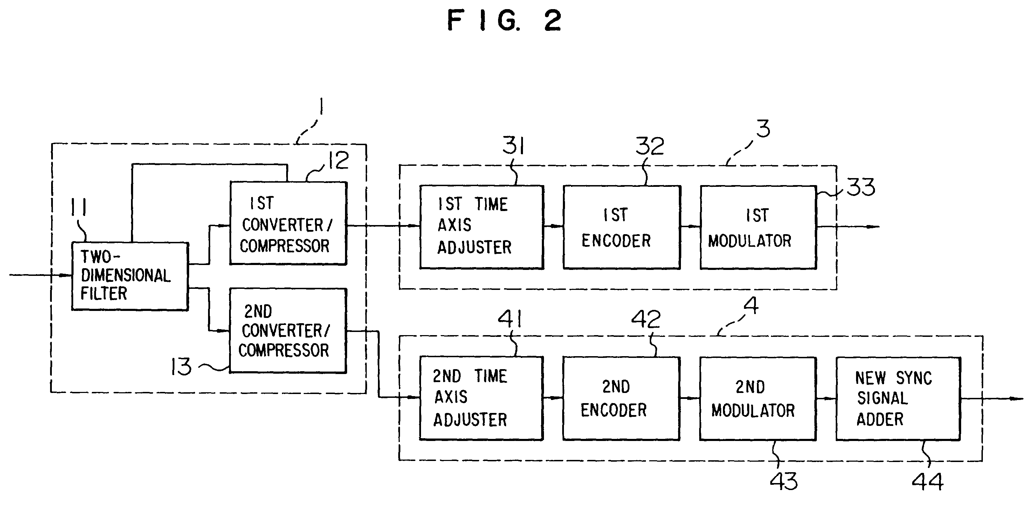

Fig. 2 shows the structure of one form of the first input signal processor unit 1, the quadrature signal processor unit 3 and the bar signal processor unit 4. Referring to Fig. 2, the first input signal processor unit 1 includes a two-dimensional filter 11, a first converter/compressor 12 and a second converter/compressor 13, the quadrature signal processor unit 3 includes a first time base adjuster 31, a first encoder 32 and a first modulator 33, and the bar signal processor unit 4 includes a second time base adjuster 41, a second encoder 42, a second modulator 43 and a new synchronizing signal adder 44.

A picture input signal applied to the first input signal processor unit 1 is divided into a high spatial frequency component and a low spatial frequency component by the two-dimensional filter 11, and these components are supplied to the first converter/compressor 12 and the second converter/compressor 13 respectively. Each of these converter/compressors 12 and 13 carries out, for example, DCT conversion to remove redundant data thereby effecting data compression. In the case of effecting the data compression for the purpose of variable-length encoding, the amount of data that can be transmitted is restricted by the path of transmission. Therefore, in order to reliably transmit the low band component of the picture data, a signal indicative of an overflow of transmitted data from the first converter/compressor 12 is fed back to the two-dimensional filter 11 to limit the pass band of the filter 11, so that the amount of data supplied as an input to the second converter/compressor 13 can be controlled.

The high band component of the picture data is supplied to the first time base adjuster 31 from the first converter/compressor 12, and its time base is adjusted in this adjuster 31. The output signal of the first time base adjuster 31 is subjected to, for example, partial response encoding in the first encoder 32 and is then modulated into a digital signal by the first modulator 33. The low band component of the picture data is supplied to the second time base adjuster 41 from the second converter/compressor 13, and its time base is adjusted in this adjuster 41 so as to be suitable for the transmission of the bar parts of the picture. The output signal of the second time base adjuster 41 is encoded in the second encoder 42. The output signal of the encoder 42 is subjected in the second modulator 43 to digital modulation, for example, 16QAM, and a new synchronizing signal id added as required to the digital signal in the new synchronizing signal adder 44. This new synchronizing signal is added to prepare for a future case where the conventional synchronizing signal may be changed so as to improve the transmission power and the efficiency of the information transmission rate.

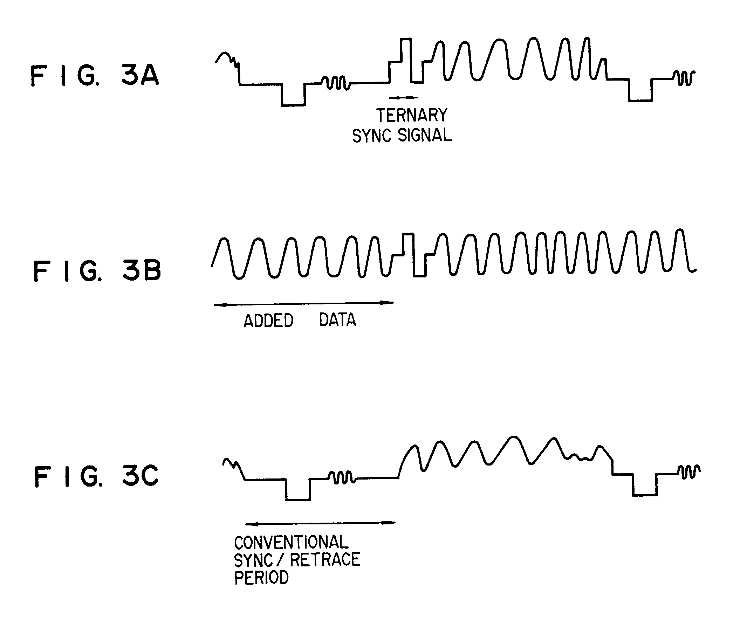

Figs. 3A, 3B and 3C illustrate such a waveform, by way of example. Fig. 3A shows a signal waveform in which a three level synchronizing pulse is added to an overscan part of the television screen. Practically, such a signal waveform is preferably used. Fig. 3C shows a comparative conventional signal waveform. In the illustrated embodiment of the present invention, the high frequency component of the picture data is dealt with by the quadrature signal processor unit 3, and the low frequency component of the picture data is dealt with by the bar signal processor unit 4. However, this relation may be inverted. That is, the high frequency component may be transmitted through the bar signal processor unit 4, so that, for the time being, it is used as a signal for reinforcing the main panel part of the picture transmitted according to the conventional manner, and, in future, the low frequency component of the picture data is dealt with by the quadrature signal processor unit 3 or by the bar signal processor unit 4 as in the case of the present invention.

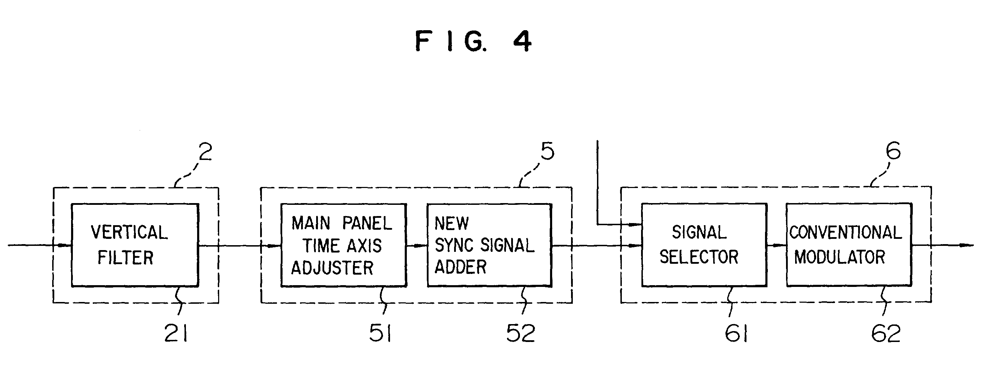

Fig. 4 shows the structure of one form of the second input signal processor unit 2, the main panel signal processor unit 5 and the main signal processor unit 6. Referring to Fig. 4, the second input signal processor unit 2 includes a vertical filter 21, the main panel signal processor unit 5 includes a main panel time base adjuster 51 and a new synchronizing signal adder 52, and the main signal processor unit 6 includes a signal selector 61 and a conventional modulator 62. A picture input signal applied to the second input signal processor unit 2 is subjected in the vertical filter 21 to band limitation so that it can be transmitted through the main panel signal processor unit 5. After the number of scanning lines is changed, the time base of the signal is adjusted by the main panel time base adjuster 51, and a new synchronizing signal is added as required by the synchronizing signal adder 52. Such a signal is supplied as a first input to the signal selector 61. The output signal of the bar signal processor unit 4 is supplied as a second input to the signal selector 61. The signal selector 61 selects one of the first and second inputs depending on the bar parts or the main panel part of the picture. The output signal of the signal selector 61 is supplied to the conventional modulator 62 to be modulated into, for example, the base band of the NTSC signal, and, after addition of the synchronizing signal of the NTSC system, the resultant signal appears from the main signal processor unit 6.

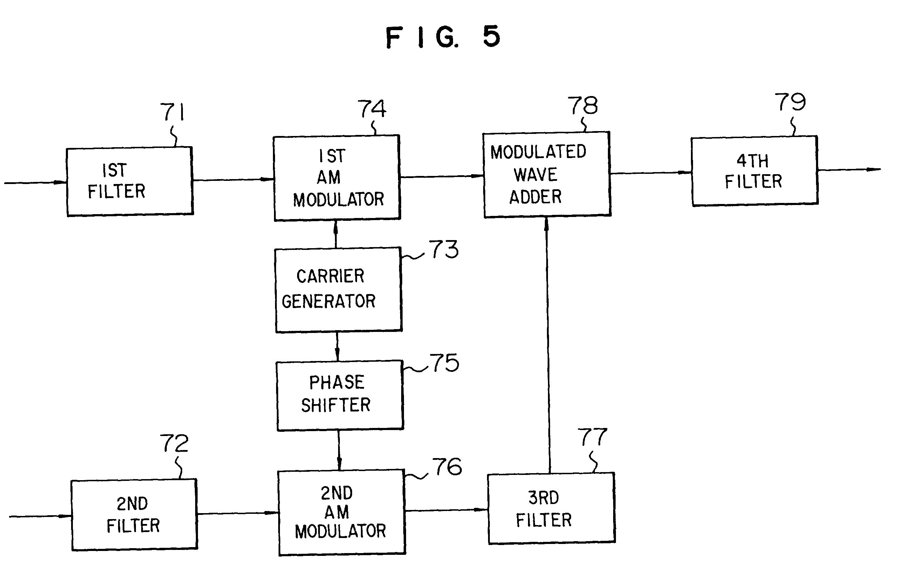

Fig. 5 shows the structure of one form of the quadrature modulator unit 7. Referring to Fig. 5, the quadrature modulator unit 7 includes a first filter 71, a second filter 72, a carrier generator 73, a first AM modulator 74, a phase shifter 75, a second AM modulator 76, a third filter 77, a modulated wave adder 78 and a fourth filter 79. After the output signal of the main signal processor unit 6 is subjected to band limitation by the first filter 71, the output signal of the carrier generator 73 is modulated by the first AM modulator 74. After the output signal of the quadrature signal processor unit 3 is subjected to band limitation by the second filter 72, the carrier having its phase shifted by an angle of 90° by the phase shifter 75 is modulated by the second AM modulator 76. The signal modulated by the second AM modulator 76 is subjected to band limitation in an inverse Nyquist characteristic by the third filter 77 as required so that the signal is compatible with the conventional signal. The output signal of the third filter 77 is added in the modulated carrier adder 78 to the output signal of the first AM modulator 74, and the output signal of the modulated carrier adder 78 is subjected to band limitation by the fourth filter 79 so as to comply with the conventional VSB-AM modulation. (For details, refer to JP-A-63-19989.)

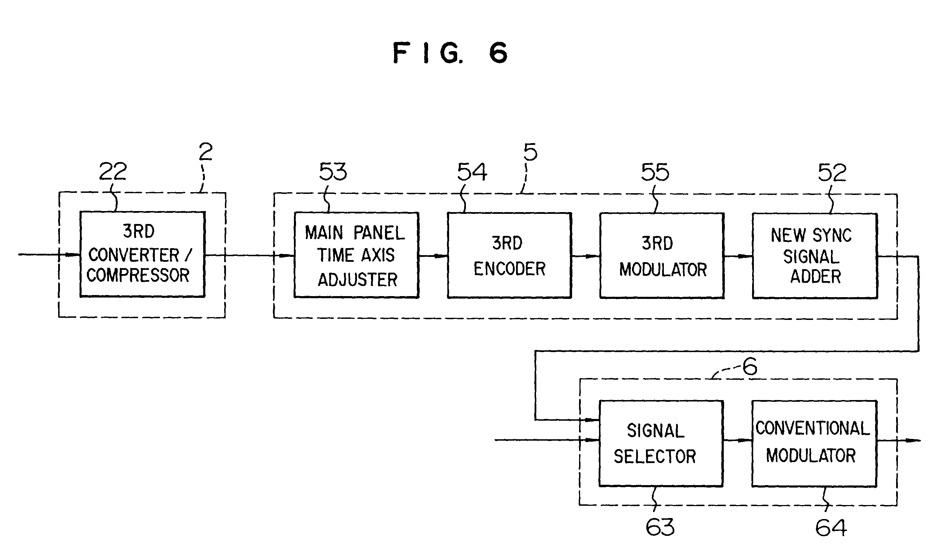

Fig. 6 shows the structure of the second input signal processor unit 2, the main panel signal processor unit 5 and the main signal processor unit 6 in a second aspect of the embodiment of the present invention. The second input signal processor unit 2 includes a third converter/compressor 22, the main panel signal processor unit 5 includes a main panel time base adjuster 53, a third encoder 54, a third modulator 55 and a new synchronizing signal adder 52, and the main signal processor unit 6 includes a signal selector 63 and a conventional modulator 64. A picture input signal applied to the second input signal processor unit 2 is supplied to the third converter/compressor 22 which carries out, for example, the DCT conversion to remove redundant data for the purpose of data compression. After the time base of the output signal of the third converter/compressor 22 is adjusted in the main panel time base adjuster 53, the signal is encoded by the third encoder 54. The output signal of the third encoder 54 is subjected to digital modulation, for example, 16QAM, and, after, for example, a three level synchronizing pulse is added as required by the new synchronizing signal adder 52, the modulated signal is supplied as a first input to the signal selector 63. The output signal of the bar signal processor unit 3 is applied as a second input to the signal selector 63. The signal selector 63 selects one of the first and second inputs depending on the bar parts or the main panel part of the picture. In this case, by transmitting the data from the main panel signal processor unit 5 during the synchronizing signal period of the input signal from the bar signal processor unit 3 or during the retrace period, the data can be efficiently transmitted.

The capability of efficient transmission of data will be described by reference to Fig. 3B. The output signal of the signal selector 63 is modulated by the conventional modulator 64 into, for example, a signal similar to the baseband signal of the NTSC system. In this case too, it is efficient to eliminate the synchronizing signal period, the retrace period, etc. of the NTSC signal and to transmit the data in these periods, as shown in Fig. 3B.

In the form shown in Fig. 6, the second input signal processor unit 2 includes only one third converter/compressor 22. However, multiple such third converter/compressors 22 corresponding to multiple broadcast programs respectively may be provided, and the output signals of these converter/compressors 22 may be suitably arrayed along the time base in the main panel time base adjuter 53. Such an arrangement can be easily designed so as to transmit the plural broadcast programs.

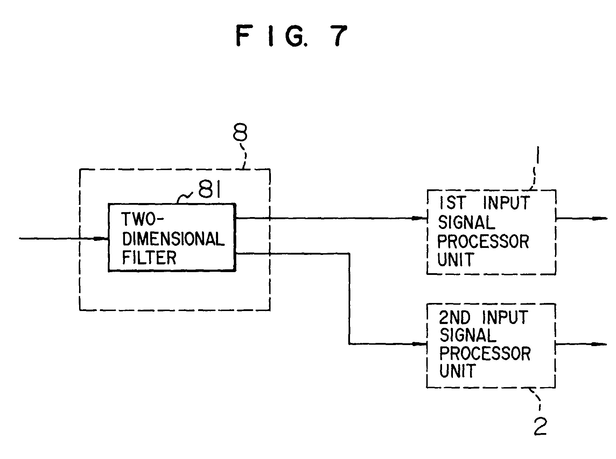

Fig. 7 shows the structure of one form of a third input signal processor unit 8 employed in the second aspect of the present invention. Referring to Fig. 7, the third input signal processor unit 8 including a two-dimensional filter 81 is connected to both the first input signal processor unit 1 and the second input signal processor unit 2. It will be seen that this third input signal processor unit 8 is connected in the stage preceding the first and second input signal processor units 1 and 2 so as to transmit a high definition picture signal. Such a high definition picture signal applied to the third input processor unit 8 is divided into its high frequency band component and its low frequency band component by the two-dimensional filter 81. The low band component is supplied to the first input signal processor unit 1, and the high band component is supplied to the second input signal processor unit 2. The second input signal processor unit 2 including only one third converter/compressor 22 processes the input signal. In the form shown in Fig. 7, the low band and high band components are supplied to the first and second input signal processor units 1 and 2 respectively so as to facilitate the shift from the first stage to the second stage of the present invention. Depending on the mode of practice, the first stage can be shifted to the second stage by the use of, for example, a controlling identification signal. Also, in the case where the technique of variable length encoding is employed, it is apparent that the pass band of the two-dimentional filter 81 can be controlled by a control signal (not shown) generated from the low band side processing circuit.

One form of the receiver part of the illustrated embodiment of the present invention will now be described.

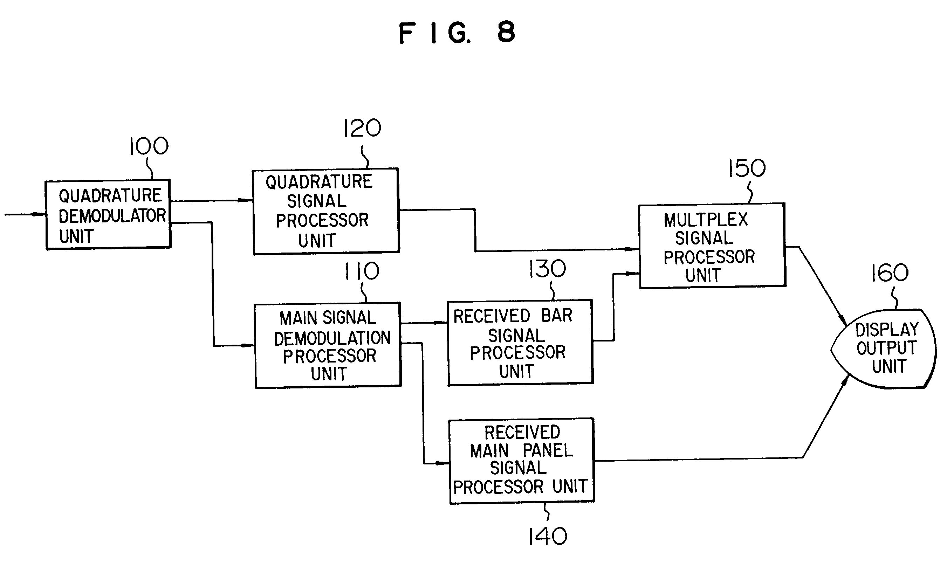

Referring to Fig. 8, one form of the receiver part includes a quadrature demodulator unit 100, a main signal demodulation processor unit 110, a received quadrature signal processor unit 120, a received bar signal processor unit 130, a received main panel signal processor unit 140, a multiplex signal demodulator unit 150 and a display output unit 160.

A picture signal input to the receiver part is subjected to quadrature detection by the quadrature demodulator unit 100. The detected quadrature component is supplied to the received quadrature signal processor unit 120 to be demodulated. On the other hand, the detected main component is demodulated in the main signal demodulation processor unit 110, and the signal of the bar parts of the picture is supplied to the received bar signal processor unit 130 to be demodulated, while the signal of the main panel part of the picture is supplied to the received main panel signal processor unit 140 to be demodulated. The signal demodulated by the received quadrature signal processor unit 120 and the signal demodulated by the received bar signal processor unit 130 are supplied as inputs to the multiplex signal demodulator unit 150 to be reproduced as the complete picture which is displayed by the display output unit 160.

On the other hand, the signal of the main panel part of the picture supplied in the conventional manner to the received main panel signal processor unit 140 is demodulated in the conventional manner, for example, according to the NTSC system, and the resultant picture signal is supplied to the display output unit 160. One of the output signal of the multiplex signal demodulator unit 150 and that of the received main panel signal processor unit 140 is displayed by the display output unit 160, so that the broadcast program can be enjoyed. It is apparent that, when different programs are broadcast, multiple pictures can be simultaneously displayed. Further, it is needless to mention that, when a picture signal in the form of digital modulated data is transmitted from the transmitter part to the receiver part, digital demodulation is carried out in the received quadrature signal processor unit 120, the received bar signal processor unit 130 and the received main panel signal processor unit 140. In the illustrated receiver part of the embodiment, both the transmission path of the received quadrature signal and that of the received bar signal are used to comply with the mode of transmission on the transmitter side. However, when the transmission path of the quadrature signal only is used, the received bar signal processor unit 130 may carry out the conventional manner of processing. On the other hand, when the path of transmission of the bar signal only is used, the quadrature modulator unit 100 may be of the conventional type.

The practical structure of the receiver part will be described in more detail.

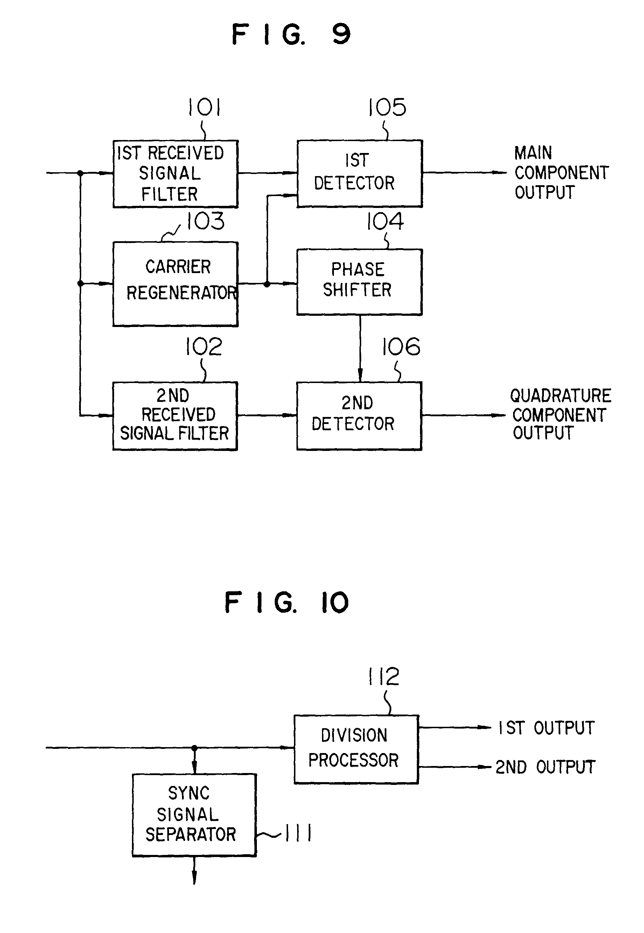

Fig. 9 shows the structure of one form of the quadrature demodulator unit 100. Referring to Fig. 9. the quadrature demodulator unit 100 includes a first received signal filter 101, a second received signal filter 102, a carrier regenerator 103, a phase shifter 104, a first detector 105 and a second detector 106. The picture signal transmitted from the transmitter part is subjected to band limitation by the first received signal filter 101, and the output signal of the first received signal filter 101 is subjected to signal detection in the first detector 105 by the carrier regenerated from the carrier regenerator 103 to appear as the main component from the first detector 105. Generally, the first received signal filter 101 has the Nyquist characteristic. On the other hand, the picture signal input to the second received signal filter 102 is subjected to band-pass type band limitation. The carrier regenerated from the carrier regenerator 103 is phase shifted by an angle of 90° by the phase shifter 104 to provide a quadrature carrier. The output signal of the second received signal filter 102 is subjected to signal detection in the second detector 106 by the quadrature carrier to appear as the quadrature component from the second detector 106. (For details, refer to JP-A-63-19989.)

Fig. 10 shows the structure of one form of the main signal demodulation processor unit 110. Referring to Fig. 10, the main signal demodulation processor unit 110 includes a synchronizing signal separator 111 and a division processor 112. In the main signal demodulation processor unit 110, the main component output signal of the quadrature demodulator 100 is applied to the synchronizing signal separator 111 in which the synchronizing signal of, for example, the NTSC signal or the synchronizing signal including, for example, the newly added three level pulse is separated. The separated synchronizing signal is supplied to various units (not shown) so as to be used to control the operating timing of the entire receiver. Further, the input signal is divided along the time base in the division processor 112, so that a first output signal representing the bar parts of the picture is supplied to the received bar signal processor unit 130, and a second output signal representing the main panel part of the picture is supplied to the received main panel signal processor unit 140.

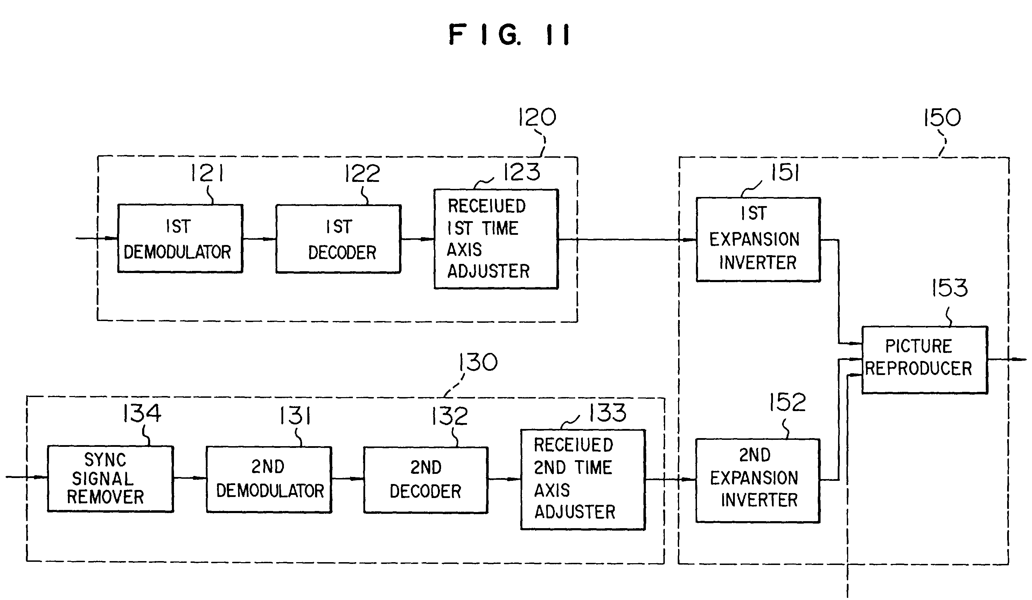

Fig. 11 shows the structure of one form of the received quadrature signal processor unit 120, the received bar signal processor unit 130 and the multiplex signal demodulator unit 150. Referring to Fig. 11, the received quadrature signal processor unit 120 includes a first demodulator 121, a first decoder 122 and a received first time base adjuster 123, the received bar signal processor unit 130 includes a second demodulator 131, a second decoder 132, a received second time base adjuster 133 and a synchronizing signal remover 134, and the received multiplex signal demodulator unit 150 includes a first expansion inverter 151, a second expansion inverter 152 and a picture reproducer 153. The quadrature component output signal applied from the quadrature demodulator unit 100 to the received quadrature signal processor unit 120 is subjected to, for example, digital demodulation in the first demodulator 121, and the output signal of the first demodulator 121 is decoded in the first decoder 122 to appear from the received first time base adjuster 123 acting to adjust the timing. From the bar part picture signal applied from the main signal demodulation processor unit 110 to the bar signal processor unit 130, the synchronizing signal is removed as required in the synchronizing signal remover 134. The output signal of the synchronizing signal remover 134 is subjected to, for example, digital demodulation in the second demodulator 131, and the output signal of the second demodulator 131 is decoded in the second decoder 132 to appear from the received second time base adjuster 133 acting to adjust the timing. The data converted and compressed at the transmitter are subjected to expansion and inversion in the first expansion inverter 151 and the second expansion inverter 152 in the multiplex signal demodulator unit 150 respectively, and the output signal of the first expansion inverter 151 and that of the second expansion inverter 152 are jointly supplied to the picture reproducer 153 to be reproduced into the complete original picture to appear as the output of the picture reproducer 153. Further, the main panel signal transmitted in the conventional manner through the path of main panel signal transmission may be enhanced in the picture reproducer 153 by the enhance signal transmitted through the path of bar signal transmission and/or the path of quadrature signal transmission. This can be easily practised.

Fig. 12 shows the structure of one form of the received main panel signal processor unit 140. Referring to Fig. 12, the received main panel signal processor unit 140 includes a conventional demodulator 141. The picture main panel signal appearing from the main signal demodulation processor unit 110 is demodulated in the conventional manner by the conventional demodulator 141 which is, for example, an NTSC demodulator. It is apparent that, when a picture signal broadcast according to the conventional system is received, the picture signal covering the entire display screen is demodulated to appear as an output signal.

Fig. 13 shows the structure of one form of a second aspect of the received main panel signal processor unit 140. Referring to Fig. 13, the received main panel signal processor unit 140 includes a synchronizing signal remover 142, a third demodulator 143, a third decoder 144 a third time base adjuster 145 and a third decompressor/inverse convertor 146. From the picture main panel signal appearing from the main signal demodulation processor unit 110, the synchronizing signal is removed as required in the synchronizing signal remover 142, and the output signal of the synchronizing signal remover 142 is subjected to, for example, digital demodulation by the third demodulator 143. The output signal of the third demodulator 143 is decoded by the third decoder 144 to be supplied through the third time base adjuster 145 to the third decompressor/inverse convertor 146 to be reproduced. When the reproduced picture is complete, this picture signal is directly supplied to the display output unit 160 to be displayed. On the other hand, when, for example, the reproduced picture signal represents the high definition component of the picture to be reproduced by the multiplex signal demodulator unit 150, the output signal of the main panel signal processor unit 140 is supplied to the picture reproducer 153 of the multiple signal demodulator unit 150 so as to reproduce the high definition picture. Further, when the main panel signal processor unit 140 is used to transmit multiple broadcast programs, multiple third expansion inverters 146 are provided so as to simultaneously output multiple pictures. It is needless to mention that, in this case, the display output unit 160 can display a selected one of the plural broadcast programs and can also simultaneously display all of the broadcast programs.

In the illustrated embodiments of the present invention, the NTSC system is referred to as an example of the conventional systems. However, it is apparent that the present invention is applicable to the other conventional systems including the PAL system and the SECAM system. Further, although the practical forms of digital picture data conversion, compression and transmission are illustrated by way of example, it is apparent that picture data conversion, compression and transmission in an analog mode and a hybrid analog-digital mode can also be similarly practised. Also, the manner of signal processing may be such that the bar part picture signal includes part of the conventional retrace period.

## Claims

1. A television signal processing apparatus comprising:
a first input signal processor unit (1) for processing a first picture signal;
a second input signal processor unit (2) for processing a second picture signal;
a main panel signal processor unit (5) for processing an input to obtain an output as a main panel signal corresponding to a main panel part (161) which constitutes a picture having a predetermined aspect ratio larger than a conventional aspect ratio of 4:3;
a bar signal processor unit (4) for processing an input to obtain an output as a bar signal which constitutes upper and lower bar parts (162, 163) of a 4:3 aspect ratio picture relative to a picture having said predetermined aspect ratio greater than 4:3;
a main signal processor unit (6) for processing inputs to obtain an output as a main signal corresponding to a picture having the aspect ratio 4:3; and
a modulator unit (7) for modulating an input;
wherein said first input signal processor unit (1) supplies its output as the input to said bar signal processor unit (4), said second input signal processor unit (2) supplies its output as the input to said main panel signal processor unit (5), said bar signal processor unit (4) and said main panel signal processor unit (5) supply their outputs as the inputs to said main signal processor unit (6), and said main signal processor unit (6) supplies its output as the input to said modulator unit (7) to generate a modulated main output signal;
wherein the main panel signal corresponding to a main panel part (161) of the second picture signal and the bar parts signal corresponding to the bar parts (162,163) of the first picture signal are supplied to a conventional modulator in said main signal processing unit (6).

2. A television signal processing apparatus according to claim 1, wherein a quadrature signal processor unit (3) is further provided, said modulator unit (7) is a quadrature modulator unit, said first input signal processor unit (1) supplies its output as an input to said quadrature signal processor unit (3) and/or said bar signal processor unit (4), and said quadrature signal processor unit (3) supplies its output as a second input to said quadrature modulator unit (7), whereby the picture signal is transmitted by a path of transmission through said quadrature modulator unit and/or a path of transmission through said bar signal processor unit processing the bar part of the picture.

3. A television signal processing apparatus according to Claim 1 or 2, wherein said main panel signal processor unit (5) transmits the main panel picture signal by modulating its input signal according to a new modulation mode different from the conventional one used in the NTSC, or PAL, or SECAM system.

4. A television signal processing apparatus according to Claim 2, wherein said quadrature signal processor unit (3) and said bar signal processor unit (4) use the same conventional synchronizing signal as that used in the NTSC, or PAL, or SECAM system, and the picture data are modulated so as to be transmitted in the form of a digital signal.

5. A television signal processing apparatus according to Claim 1 or 2, wherein said bar signal processor unit (4) adds a new synchronizing signal to the bar part picture signal besides the conventional synchronizing signal used in the NTSC, or PAL, or SECAM system.

6. A television signal processing apparatus according to Claim 5, wherein said newly added synchronizing signal is a three level synchronizing signal.

7. A television signal processing apparatus according to Claim 1 or 2, wherein the input signals applied to said first input signal processor unit (1) and said second input signal processor unit (2) are broadcast programs having the same contents.

8. A television signal processing apparatus according to claim 3, wherein said main panel signal processor unit (5) modulates the main panel part of the picture signal into a digital signal.

9. A television signal processing apparatus according to Claim 3 or 8, wherein a third input signal processor unit (8) is provided to divide its picture input signal into a low frequency band component and a high frequency band component which are supplied as inputs to said first input signal processor unit (1) and said second input signal processor unit (2) respectively, and said main panel signal processor unit (5) processes its input signal so as to transmit the high band component of the picture signal, whereby a picture having entirely a high degree of definition can be transmitted.

10. A television signal processing apparatus according to Claim 3 or 8, wherein said main panel signal processor unit (5) uses a new synchronizing signal added in place of the conventional synchronizing signal used in the NTSC, or PAL, or SECAM system.

11. A television signal processing apparatus according to Claim 10, wherein said newly added synchronizing signal is a three level synchronizing signal.

12. A television signal processing apparatus according to Claim 2 or 3, wherein the output signal of said first input signal processor unit (1) is divided into a low frequency band component and a high frequency band component which are supplied as inputs to said bar signal processor unit (4) and said quadrature signal processor unit (3) respectively.

13. A television signal processing apparatus according to Claim 3, wherein said bar signal processor unit (4) modulates the picture signal according to an analog modulation mode or a digital modulation mode and adds the modulated picture signal in place of the conventional synchronizing signal period or retrace period used in the NTSC, or PAL, or SECAM system.

14. A television signal processing apparatus according to Claim 3, wherein said second input signal processor unit (2) receives multiple picture signals as its inputs and transmits multiple broadcast programs through said main panel signal processor unit (5).

15. A television signal processing apparatus comprising:
a demodulator unit (100) for demodulating an input to obtain an output;
a main signal demodulation processor unit (110) for processing an input to obtain first and second outputs as a main signal corresponding to a picture having a conventional aspect ratio 4:3;
a received main panel signal processor unit (140) for processing an input to obtain an output as a received main panel signal corresponding to a main panel part (161) which constitutes a picture having a predetermined aspect ratio within the picture having the aspect ratio 4:3;
a received bar signal processor unit (130) for processing an input to obtain an output as a received bar signal corresponding to upper and lower bar parts (162, 163) which constitute a part of a 4:3 aspect ratio picture relative to a picture having said predetermined aspect ratio;
a multiplex signal demodulator unit (150); and
a display output unit (160);
wherein said demodulator unit (100) supplies it main output as the input to said main signal demodulator processor unit (110), said main signal demodulator processor unit (110) supplies its first output as the input to said received bar signal processor unit (130) and supplies its second output as the input to said received main panel signal processor unit (140), said received bar signal processor unit (130) supplies its output as the input to said multiplex signal demodulator unit (150), and said multiplex signal demodulator unit (150) and/or said main panel signal processor unit (140) supplies their outputs as inputs to said display output unit (160) so as to display a picture using said display output unit (160).

16. A television signal processing apparatus according to Claim 15, wherein said demodulator unit (100) is a quadrature demodulator unit and supplies its quadrature component output as an input to a received quadrature signal processor unit (120), and said received quadrature signal processor unit supplies its output as a second input to said multiplex signal processor unit (150).

17. A television signal processing apparatus according to Claim 15 or 16, wherein said received quadrature signal processor unit (120) and said received bar signal processor unit (130) supply their outputs as inputs to said multiplex signal demodulator unit (150), and a picture having a high degree of definition is displayed by said display output unit (160).

18. A television signal processing apparatus according to Claim 15, 16 or 17, wherein said main signal demodulation processor unit (110) includes a synchronizing signal separator (111) that can separate either the conventional synchronizing signal used in the NTSC, or PAL, or SECAM system or a newly added synchronizing signal.

19. A television signal processing apparatus according to Claim 18, wherein said newly added synchronizing signal is a three level synchronizing signal.

20. A television signal processing apparatus according to Claim 15, 16 or 17, wherein the input to said received bar signal processor unit (130) is subjected to digital demodulation processing.

21. A television signal processing apparatus according to Claim 15, 16 or 17, wherein the input to said received quadrature signal processor unit (120) is subjected to digital demodulation processing.

22. A television signal processing apparatus according to Claim 15, 16 or 17, wherein the input to said received main panel signal processor unit (140) is subjected to digital demodulation processing.

23. A television signal processing apparatus according to Claim 15 or 16, wherein said received main panel signal processor unit (140) demodulates multiple transmitted picture signals to supply the demodulated picture signals as inputs to said display output unit (160), and said display output unit selects the multiple pictures so as to display a required one of them or simultaneously display the plural pictures.

24. A television signal processing apparatus according to Claim 4, 5 or 6, wherein a signal enhancing the signal transmitted through said main panel signal processor unit (5) is applied as an input to said first input signal processor unit (1).

## Patentansprüche

1. Fernsehsignal-Verarbeitungsgerät mit:
einer ersten Eingangssignal-Verarbeitungseinheit (1) zum Verarbeiten eines ersten Bildsignals;
einer zweiten Eingangssignalsignal-Verarbeitungseinheit (2) zum Verarbeiten eines zweiten Bildsignals;
einer Verarbeitungseinheit (5) für ein Hauptbereichsignal zum Verarbeiten einer Eingabe zum Erhalt einer Ausgabe in Form eines einem Hauptbereichteil (161) entsprechenden Hauptbereichsignals, wobei der Hauptbereichteil ein Bild mit einem vorgegebenen Seitenverhältnis bildet, das größer als ein herkömmliches Seitenverhältnis von 4 : 3 ist;
einer Balkensignal-Verarbeitungseinheit (4) zum Verarbeiten einer Eingabe zum Erhalt einer Ausgabe in Form eines Balkensignals, das einen oberen Balkenteil (162) und einen unteren Balkenteil (163) eines Bildes mit einem 4 : 3 Seitenverhältnis bezüglich eines Bildes mit dem vorgegebenen Seitenverhältnis, das größer als 4 : 3 ist, bildet;
einer Hauptsignal-Verarbeitungseinheit (6) zum Verarbeiten von Eingaben zum Erhalt einer Ausgabe in Form eines Hauptsignals, das einem Bild mit dem Seitenverhältnis von 4 : 3 entspricht und
einer Modulationseinheit (7) zum Modulieren einer Eingabe;
wobei die erste Eingangssignal-Verarbeitungseinheit (1) ihre Ausgabe als Eingabe an die Balkensignalverarbeitungseinheit (4) anlegt, die zweite Eingangssignal-Verarbeitungseinheit (2) ihre Ausgabe als Eingabe an die Verarbeitungseinheit (5) für das Hauptbereichsignal anlegt, die Balkensignalverarbeitungseinheit (4) und die Verarbeitungseinheit (5) für das Hauptbereichsignal ihre Ausgaben als Eingaben an die Hauptsignal-Verarbeitungseinheit (6) anlegen und die Hauptsignal-Verarbeitungseinheit (6) ihre Ausgabe als Eingabe an die Modulationseinheit (7) anlegt, zum Erzeugen eines modulierten Hauptausgabesignals,
wobei das einem Hauptbereichteil (161) des zweiten Bildsignals entsprechende Hauptbereichsignal und das den Balkenteilen (162, 163) des ersten Bildsignals entsprechende Balkenteilsignal an eine herkömmliche Modulationseinrichtung in der Hauptsignal-Verarbeitungseinheit (6) angelegt werden.

2. Fernsehsignal-Verarbeitungsgerät nach Anspruch 1, bei dem ferner eine Quadratursignal-Verarbeitungseinheit (3) vorgesehen ist, die Modulationseinheit (7) eine Quadraturmodulationseinheit ist, die erste Eingangssignal-Verarbeitungseinheit (1) ihre Ausgabe als Eingabe an die Quadratursignal-Verarbeitungseinheit (3) und/oder die Balkensignal-Verarbeitungseinheit (4) anlegt und die QuadratursignalVerarbeitungseinheit (3) ihre Ausgabe als Eingabe an die Quadraturmodulationseinheit (7) anlegt, wodurch das Bildsignal über einen Übertragungsweg durch die Quadraturmodulationseinheit und/oder einen Übertragungsweg durch die den Balkenteil des Bildes verarbeitende Balkensignal-Verarbeitungseinheit übertragen wird.

3. Fernsehsignal-Verarbeitungsgerät nach Anspruch 1 oder 2, bei dem die Verarbeitungseinheit (5) für das Hauptbereichsignal das Hauptbereich-Bildsignal durch Modulieren ihres Eingangssignals gemäß einer neuen Modulationsart, die sich von den herkömmlichen im NTSC-, PAL- oder SECAM-System verwendeten Modulationsart unterscheidet, übertragen wird.

4. Fernsehsignal-Verarbeitungsgerät nach Anspruch 2, bei dem die Quadratursignal-Verarbeitungseinheit (3) und die Balkensignal-Verarbeitungseinheit (4) dasselbe herkömmliche Synchronisationssignal verwenden, das im NTSC-, PAL- oder SECAM-System verwendet wird, und die Bilddaten so moduliert werden, daß sie in Form eines digitalen Signals übertragen werden.

5. Fernsehsignal-Verarbeitungsgerät nach Anspruch 1 oder 2, bei dem die Balkensignal-Verarbeitungseinheit (4) neben dem herkömmlichen Synchronisationssignal, das im NTSC-, PAL- oder SECAM-System verwendet wird, ein neues Synchronisationssignal zum Balkenteil-Bildsignal hinzufügt.

6. Fernsehsignal-Verarbeitungsgerät nach Anspruch 5, bei dem das neue hinzugefügte Synchronisationssignal ein Synchronisationssignal mit drei Pegeln ist.

7. Fernsehsignal-Verarbeitungsgerät nach Anspruch 1 oder 2, bei dem die an die erste Eingangssignal-Verarbeitungseinheit (1) und die zweite Eingangssignal-Verarbeitungseinheit (2) angelegten Eingangssignale Fernsehprogramme mit demselben Inhalt sind.

8. Fernsehsignal-Verarbeitungsgerät nach Anspruch 3, bei dem die Verarbeitungseinheit (5) für das Hauptbereichsignal den Hauptbereichteil des Bildsignals zum Erhalt eines digitalen Signals moduliert.

9. Fernsehsignal-Verarbeitungsgerät nach Anspruch 3 oder 8, bei dem eine dritte Eingangssignal-Verarbeitungseinheit (8) zum Unterteilen ihres Eingangssignals in eine Komponente aus einem niederfrequenten Band und eine Komponente aus einem hochfrequenten Band vorgesehen ist, die als Eingänge an die erste Eingangssignal-Verarbeitungseinheit (1) bzw. die zweite Eingangssignal-Verarbeitungseinheit (2) angelegt werden und die Verarbeitungseinheit (5) für das Hauptbereichsignal ihr Eingangssignal so verarbeitet, daß die Komponente des Bildsignals aus dem hochfrequenten Band, übertragen wird, wodurch ein Bild, das in seiner Gesamtheit einen hohen Auflösungsgrad aufweist, übertragen werden kann.

10. Fernsehsignal-Verarbeitungsgerät nach Anspruch 3 oder 8, bei dem die Verarbeitungseinheit (5) für das Hauptbereichsignal ein neues Synchronisationssignal verwendet, das anstelle des herkömmlichen im NTSC-, PAL- oder SECAM-System verwendeten herkömmlichen Synchronisationssignal hinzugefügt wird.

11. Fernsehsignal-Verarbeitungsgerät nach Anspruch 10, bei dem das neu hinzugefügte Synchronisationssignal ein Synchronisationssignal mit drei Pegeln ist.

12. Fernsehsignal-Verarbeitungsgerät nach Anspruch 2 oder 3, bei dem das Ausgangssignal der ersten Eingangssignal-Verarbeitungseinheit (1) in eine Komponente aus einem niederfrequenten Band und eine Komponente aus einem hochfrequenten Band unterteilt wird, die als Eingänge an die Balkensignalverarbeitungseinheit (4) bzw. die Quadratursignal-Verarbeitungseinheit (3) angelegt werden.

13. Fernsehsignal-Verarbeitungsgerät nach Anspruch 3, bei dem die Balkensignal-Verarbeitungseinheit (4) das Bildsignal gemäß einer analogen Modulationsart oder einer digitalen Modulationsart moduliert und dem modulierten Bildsignal anstelle der herkömmlichen Synchronisationssignalperiode oder Rücksprungperiode, die in dem NTSC-, oder PAL- oder SECAM-System verwendet werden, das modulierte Bildsignal hinzufügt.

14. Fernsehsignal-Verarbeitungsgerät nach Anspruch 3, bei dem die zweite Eingangssignal-Verarbeitungseinheit (2) als Eingabe mehrere Bildsignale empfängt und mehrere Fernsehprogramme durch die Verarbeitungseinheit (5) für das Hauptbereichsignal überträgt.

15. Fernsehsignal-Verarbeitungsgerät mit:
einer Demodulationseinheit (100) zum Demodulieren einer Eingabe zum Erhalt einer Ausgabe;
einer Verarbeitungseinheit (110) für eine Hauptsignaldemodulation zum Verarbeiten einer Eingabe zum Erhalt einer ersten Ausgabe und einer zweiten Ausgabe in Form eines einem Bild mit einem herkömmlichen Seitenverhältnis von 4 : 3 entsprechenden Hauptsignals;
einer Verarbeitungseinheit (140) für das empfangene Hauptbereichsignal zum Verarbeiten einer Eingabe zum Erhalt einer Ausgabe in Form eines einem Hauptbereichteil (161) entsprechenden empfangenen Hauptbereichsignals, das ein Bild mit einem vorgegebenen Seitenverhältnis innerhalb des Bildes mit dem Seitenverhältnis von 4 : 3 bildet;
einer Verarbeitungseinheit (130) für das empfangene Balkensignal zum Verarbeiten einer Eingabe zum Erhalt einer Ausgabe in Form eines einem oberen Balkenteil (162) und einem unteren Balkenteil (163) entsprechenden empfangenen Balkensignals, das einen Teil eines Bildes mit einem 4 : 3 Seitenverhältnis bezüglich eines Bildes mit dem vorgegebenen Seitenverhältnis bildet;
einer Multiplexsignaldemodulationseinheit (150) und einer Anzeigeausgabeeinheit (160),
wobei die Demodulationseinheit (100) ihre Hauptausgabe als Eingang an die Verarbeitungseinheit (110) für die Hauptsignaldemodulation anlegt, die Verarbeitungseinheit (110) für die Hauptsignaldemodulation ihre erste Ausgabe als Eingang an die Verarbeitungseinheit (130) für das empfangene Balkensignal anlegt und ihre zweite Ausgabe als Eingang an die Verarbeitungseinheit (140) für das empfangene Hauptbereichsignal anlegt, die Verarbeitungseinheit (130) für das empfangene Balkensignal ihre Ausgabe als Eingang an die Multiplexsignaldemodulationseinheit (150) anlegt und die Multiplexsignaldemodulationseinheit (150) und/oder die Verarbeitungseinheit (140) für das Hauptbereichsignal ihre Ausgaben als Eingänge an die Anzeigeausgabeeinheit (160) anlegen, um ein Bild unter Verwendung der Anzeigeausgabeeinheit (160) anzuzeigen.

16. Fernsehsignal-Verarbeitungsgerät nach Anspruch 15, bei dem die Demodulationseinheit (100) eine Quadraturdemodulationseinheit ist und ihre Ausgabe in Form einer Quadraturkomponente als Eingang an eine Verarbeitungseinheit (120) für ein empfangenes Quadratursignal anlegt und die Verarbeitungseinheit für das empfangene Quadratursignal ihre Ausgabe als zweiten Eingang an die Multiplexverarbeitungseinheit (150) anlegt.

17. Fernsehsignal-Verarbeitungsgerät nach Anspruch 15 oder 16, bei dem die Verarbeitungseinheit (120) für das empfangene Quadratursignal und die Verarbeitungseinheit (130) für das empfangene Balkensignal ihre Ausgaben als Eingänge an die Mulitplexsignaldemodulationeinheit (150) anlegen, und mit der Anzeigeausgabeeinheit (160) ein Bild mit einem hohen Auslösungsgrad angezeigt wird.

18. Fernsehsignal-Verarbeitungsgerät nach Anspruch 15, 16 oder 17, bei dem die Verarbeitungseinheit (110) für die Hauptsignaldemodulation eine Synchronisationssignal-Trenneinrichtung (111) enthält, die entweder das im NTSC-, PAL- oder SECAM-System oder ein neu hinzugefügtes Synchronisationssignal abtrennen kann.

19. Fernsehsignal-Verarbeitungsgerät nach Anspruch 18, bei dem das neu hinzugefügte Synchronisationssignal ein Synchronisationssignal mit drei Pegeln ist.

20. Fernsehsignal-Verarbeitungsgerät nach Anspruch 15, 16 oder 17, bei dem der Eingang für die Verarbeitungseinheit (130) für das empfangene Balkensignal einer digitalen Demodulationsverarbeitung unterzogen wird.

21. Fernsehsignal-Verarbeitungsgerät nach Anspruch 15, 16 oder 17, bei dem der Eingang der Verarbeitungseinheit (120) für das empfangene Quadratursignal einer digitalen Demodulationsverarbeitung unterzogen wird.

22. Fernsehsignal-Verarbeitungsgerät nach Anspruch 15, 16 oder 17, bei dem der Eingang der Verarbeitungseinheit (140) für das empfangene Hauptbereichsignal einer digitalen Demodulationsverarbeitung unterzogen wird.

23. Fernsehsignal-Verarbeitungsgerät nach Anspruch 15 oder 16, bei dem die Verarbeitungseinheit (140) für das empfangene Hauptbereichsignal mehrere übertragene Bildsignale demoduliert, um die demodulierten Bildsignale als Eingaben an die Anzeigeausgabeeinheit (160) anzulegen, und die Anzeigeausgabeeinheit die mehreren Bilder einer Auswahl zugrunde legt, um ein gewünschtes Bild anzuzeigen oder gleichzeitig die mehreren Bilder anzuzeigen.

24. Fernsehsignal-Verarbeitungsgerät nach Anspruch 4, 5 oder 6, bei dem ein das durch die Verarbeitungseinheit (5) für das Hauptbereichsignal übertragene Signal verbesserndes Signal als Eingang an die erste Eingangssignal-Verarbeitungseinheit (1) angelegt wird.

## Revendications

1. Dispositif de traitement de signaux de télévision, comprenant:
une première unité (1) de traitement de signaux d'entrée pour traiter un premier signal d'image;
une seconde unité (2) de traitement de signaux d'entrée pour traiter un second signal d'image;
une unité (5) de traitement de signaux de zone principale d'écran pour traiter un signal d'entrée afin d'obtenir, en tant que signal de sortie, un signal de zone principale d'écran correspondant à une partie principale (161) d'écran qui constitue une image ayant un format prédéterminé, supérieur à un format classique de 4:3;
une unité (4) de traitement de signaux de barres pour traiter un signal d'entrée afin d'obtenir, en tant que signal de sortie, un signal de barres qui constitue les parties formant barre supérieure et inférieure (l62,l63) d'une image de format 4:3 par rapport à une image ayant ledit format prédéterminé, supérieur à 4:3;
une unité (6) de traitement de signaux principaux pour traiter des signaux d'entrée afin d'obtenir, en tant que signal de sortie, un signal principal correspondant à une image ayant le format de 4:3; et
une unité de modulation (7) pour moduler un signal d'entrée;
dans lequel ladite première unité (1) de traitement de signaux d'entrée délivre son signal de sortie en tant que signal d'entrée pour ladite unité (4) de traitement de signaux de barres, ladite seconde unité (2) de traitement de signaux d'entrée délivre son signal de sortie en tant que signal d'entrée pour ladite unité (5) de traitement de signaux de zone principale d'écran, ladite unité (4) de traitement de signaux de barres et ladite unité (5) de traitement de signaux de zone principale d'écran délivrent leurs signaux de sortie en tant que signaux d'entrée pour ladite unité (6) de traitement de signaux principaux, et ladite unité (6) de traitement de signaux principaux délivre son signal de sortie en tant que signal d'entrée pour ladite unité de modulation (7) afin d'émettre un signal de sortie principal modulé; et
dans lequel le signal de zone principale d'écran correspondant à une partie principale (161) d'écran du second signal d'image et le signal de parties formant barres correspondant aux parties formant barres (162,163) du premier signal d'image sont délivrés à un modulateur classique dans ladite unité (6) de traitement de signaux principaux.

2. Dispositif de traitement de signaux de télévision selon la revendication 1, dans lequel une unité (3) de traitement de signaux en quadrature est en outre prévue, ladite unité de modulation (7) est une unité de modulation en quadrature, ladite première unité (1) de traitement de signaux d'entrée délivre son signal de sortie en tant que signal d'entrée pour ladite unité (3) de traitement de signaux en quadrature et/ou pour ladite unité (4) de traitement de signaux de barres, et ladite unité (3) de traitement de signaux en quadrature délivre son signal de sortie en tant que second signal d'entrée pour ladite unité de modulation en quadrature (7), d'où il résulte que le signal d'image est transmis par une voie de transmission passant par ladite unité de modulation en quadrature et/ou par une voie de transmission passant par ladite unité de traitement de signaux de barres qui traite la partie formant barres de l'image.

3. Dispositif de traitement de signaux de télévision selon la revendication 1 ou 2, dans lequel ladite unité (5) de traitement de signaux de zone principale d'écran transmet le signal d'image de zone principale d'écran en modulant son signal d'entrée selon un nouveau mode de modulation, différent du mode classique utilisé dans le système NTSC, PAL ou SECAM.

4. Dispositif de traitement de signaux de télévision selon la revendication 2, dans lequel ladite unité (3) de traitement de signaux en quadrature et ladite unité (4) de traitement de signaux de barres utilisent le même signal de synchronisation classique que celui qui est utilisé dans le système NTSC, PAL ou SECAM, et les données d'image sont modulées de manière à être transmises sous la forme d'un signal numérique.

5. Dispositif de traitement de signaux de télévision selon la revendication 1 ou 2, dans lequel ladite unité (4) de traitement de signaux de barres ajoute un nouveau signal de synchronisation au signal d'image de parties formant barres, en plus du signal de synchronisation classique utilisé dans le système NTSC, PAL ou SECAM.

6. Dispositif de traitement de signaux de télévision selon la revendication 5, dans lequel ledit signal de synchronisation nouvellement ajouté est un signal de synchronisation à trois niveaux.

7. Dispositif de traitement de signaux de télévision selon la revendication 1 ou 2, dans lequel les signaux d'entrée appliqués à ladite première unité (1) de traitement de signaux d'entrée et à ladite seconde unité (2) de traitement de signaux d'entrée sont des programmes de radiodiffusion ayant le même contenu.

8. Dispositif de traitement de signaux de télévision selon la revendication 3, dans lequel ladite unité (5) de traitement de signaux de zone principale d'écran module en un signal numérique la partie du signal d'image qui correspond à la zone principale d'écran.

9. Dispositif de traitement de signaux de télévision selon la revendication 3 ou 8, dans lequel une troisième unité (8) de traitement de signaux d'entrée est prévue pour diviser son signal d'image d'entrée en une composante dans la bande des basses fréquences et une composante dans la bande des hautes fréquences qui sont délivrées en tant que signaux d'entrée, respectivement pour ladite première unité (1) de traitement de signaux d'entrée et pour ladite seconde unité (2) de traitement de signaux d'entrée, et ladite unité (5) de traitement de signaux de zone principale d'écran traite son signal d'entrée de manière à transmettre la composante dans la bande des hautes fréquences du signal d'image, d'où il résulte qu'une image ayant entièrement un haut degré de définition peut être transmise.

10. Dispositif de traitement de signaux de télévision selon la revendication 3 ou 8, dans lequel ladite unité (5) de traitement de signaux de zone principale d'écran utilise un nouveau signal de synchronisation ajouté à la place du signal de synchronisation classique utilisé dans le système NTSC, PAL ou SECAM.

11. Dispositif de traitement de signaux de télévision selon la revendication 10, dans lequel ledit signal de synchronisation nouvellement ajouté est un signal de synchronisation à trois niveaux.

12. Dispositif de traitement de signaux de télévision selon la revendication 2 ou 3, dans lequel le signal de sortie de ladite première unité (1) de traitement de signaux d'entrée est divisé en une composante dans la bande des basses fréquences et une composante dans la bande des hautes fréquences qui sont délivrées en tant que signaux d'entrée, respectivement pour ladite unité (4) de traitement de signaux de barres et pour ladite unité (3) de traitement de signaux en quadrature.

13. Dispositif de traitement de signaux de télévision selon la revendication 3, dans lequel ladite unité (4) de traitement de signaux de barres module le signal d'image selon un mode de modulation analogique ou un mode de modulation numérique et ajoute le signal d'image modulé à la place de la période des signaux de synchronisation classiques ou de la période de suppression utilisées dans le système NTSC, PAL ou SECAM.

14. Dispositif de traitement de signaux de télévision selon la revendication 3, dans lequel ladite seconde unité (2) de traitement de signaux d'entrée reçoit de multiples signaux d'image en tant que signaux d'entrée et transmet de multiples programmes de radiodiffusion à travers ladite unité (5) de traitement de signaux de zone principale d'écran.

15. Dispositif de traitement de signaux de télévision, comprenant:
une unité de démodulation (100) pour démoduler un signal d'entrée afin d'obtenir un signal de sortie;
une unité (110) de traitement de démodulation de signal principal pour traiter un signal d'entrée afin d'obtenir en tant que premier et second signaux de sortie, un signal principal correspondant à une image ayant un format classique de 4:3;
une unité (140) de traitement de signaux reçus de zone principale d'écran pour traiter un signal d'entrée afin d'obtenir, en tant que signal de sortie, un signal reçu de zone principale d'écran correspondant à une partie principale (161) d'écran qui constitue une image ayant un format prédéterminé dans l'image ayant un format de 4:3;
une unité (130) de traitement de signaux de barres reçus pour traiter un signal d'entrée afin d'obtenir, en tant que signal de sortie, un signal de barres reçu correspondant à des parties formant barre supérieure et inférieure (162,163) qui constituent une partie d'une image de format 4:3 par rapport à une image ayant ledit format prédéterminé;
une unité de démodulation de signal multiplex (150);
une unité de sortie de visualisation (160);
dans lequel ladite unité de démodulation (100) délivre son signal de sortie principal en tant que signal d'entrée pour ladite unité (110) de traitement de démodulation de signal principal, ladite unité (110) de traitement de démodulation de signal principal délivre son premier signal de sortie en tant que signal d'entrée pour ladite unité (130) de traitement de signaux de barres reçus et délivre son second signal de sortie en tant que signal d'entrée pour ladite unité (140) de traitement de signaux reçus de zone principale d'écran, ladite unité (130) de traitement de signaux de barres reçus délivre son signal de sortie en tant que signal d'entrée pour ladite unité de démodulation de signal multiplex (150), et ladite unité de démodulation de signal multiplex (150) et/ou ladite unité (140) de traitement de signaux reçus de zone principale d'écran délivrent leurs signaux de sortie en tant que signaux d'entrée pour ladite unité de sortie de visualisation (160), de manière à visualiser une image au moyen de ladite unité de sortie de visualisation (160).

16. Dispositif de traitement de signaux de télévision selon la revendication 15, dans lequel ladite unité de démodulation (100) est une unité de démodulation en quadrature et délivre sa composante de sortie en quadrature en tant que signal d'entrée pour une unité (120) de traitement de signaux en quadrature reçus, et ladite unité de traitement de signal en quadrature reçu délivre son signal de sortie en tant que second signal d'entrée pour ladite unité de traitement de signaux multiplex (150).

17. Dispositif de traitement de signaux de télévision selon la revendication 15 ou 16, dans lequel ladite unité (120) de traitement de signaux en quadrature reçus et ladite unité (130) de traitement de signaux de barres reçus délivrent leurs signaux de sortie en tant que signaux d'entrée pour ladite unité de démodulation de signal multiplex (150), et une image ayant un degré élevé de définition est visualisée par ladite unité de sortie de visualisation (160).

18. Dispositif de traitement de signaux de télévision selon l'une quelconque des revendications 15 à 17, dans lequel ladite unité (110) de traitement de démodulation de signal principal comporte un séparateur (111) de signaux de synchronisation qui peut séparer, soit le signal de synchronisation classique utilisé dans le système NTSC, PAL ou SECAM, soit un signal de synchronisation nouvellement ajouté.

19. Dispositif de traitement de signaux de télévision selon la revendication 18, dans lequel ledit signal de synchronisation nouvellement ajouté est un signal de synchronisation à trois niveaux.

20. Dispositif de traitement de signaux de télévision selon l'une quelconque des revendications 15 à 17, dans lequel le signal d'entrée de ladite unité (130) de traitement de signaux de barres reçus est soumis à un traitement de démodulation numérique.

21. Dispositif de traitement de signaux de télévision selon l'une quelconque des revendications 15 à 17, dans lequel le signal d'entrée de ladite unité (120) de traitement de signaux en quadrature reçus est soumis à un traitement de démodulation numérique.

22. Dispositif de traitement de signaux de télévision selon l'une quelconque des revendications 15 à 17, dans lequel le signal d'entrée de ladite unité (140) de traitement de signaux reçus de zone principale d'écran est soumis à un traitement de démodulation numérique.

23. Dispositif de traitement de signaux de télévision selon la revendication 15 ou 16, dans lequel ladite unité (140) de traitement de signaux reçus de zone principale d'écran démodule les multiples signaux d'image transmis pour délivrer les signaux d'image démodulés en tant que signaux d'entrée pour ladite unité de sortie de visualisation (160), et ladite unité de sortie de visualisation sélectionne les multiples images de manière à visualiser l'une de celles-ci qui est requise ou à visualiser simultanément les multiples images.

24. Dispositif de traitement de signaux de télévision selon l'une quelconque des revendications 4 à 6, dans lequel un signal améliorant le signal transmis à travers ladite unité (5) de traitement de signal de zone principale d'écran est appliqué en tant que signal d'entrée à ladite première unité (1) de traitement de signaux d'entrée.
